# EUROPEAN PATENT SPECIFICATION

(11) **EP 1 656 535 B1**
(45) Date of publication and mention of the grant of the patent: **14.11.2007**
(21) Application number: 04745186.9
(22) Date of filing: 23.06.2004
(51) Int. Cl.: G01B 5/00, G01B 5/12, G01B 3/26

(54) **DEVICE TO MEASURE THE HOLE OF A BRAKE DISK AND METHOD TO CARRY OUT SUCH A MEASUREMENT**
VERFAHREN UND VORRICHTUNG ZUM MESSEN DES LOCHES EINER BREMSSCHEIBE
DISPOSITIF DE MESURE DU TROU D'UN DISQUE DE FREIN ET PROCEDE PERMETTANT D'EFFECTUER UNE TELLE MESURE

(30) Priority: 29.07.2003 IT BS20030071
(43) Date of publication of application: 17.05.2006
(73) Proprietor: T.Q.M. Itaca S.r.l., 25086 Rezzato (IT); Tamburini Tecnic S.r.l., 25086 Rezzato (IT)
(72) Inventor: GUERRINI, Vincenzo, I-25126 Brescia (IT)
(74) Representative: Galassi, Alessandro
(86) International application number: PCT/IT2004/000361
(87) International publication number: WO 2005/012828

(56) References cited:
- EP-A- 0 327 670
- DE-A- 2 462 156
- DE-A- 19 534 259
- US-A- 4 288 924

## Description

The present invention relates to a device for measuring the hole of a brake disk and a method for carrying out such a measurement.

In particular, the invention relates to a device used in the field of measurements designed to check whether machining tolerances on brake disks are complied with.

As is known, machining tolerances on brake disks - and in general on the mechanical components that shall build a more complex mechanical device - should be within ranges defined by construction rules. In order to check that these rules are complied with in a large number of mechanical components, two different approaches can be followed. The first approach consists in a statistical control on the components to be checked, thus obtaining short control times but a merely statistical indication on whether machining tolerances are complied with. The second approach consists in a control of the sizes to be tested on every component, thus ensuring an absolute indication on whether machining tolerances are complied with by every component, but dramatically longer check times with respect to a statistical control. Because of more and more severe requirements in terms of quality of finished products, the most recent trend in the field of brake disks is to carry out a control on structural features, such as for instance disk thickness, planarity of the portion to be engaged with linings, diameter of maximum circumference to be inscribed into the keying hole, on every brake disk. This control has given rise to the need of having measuring devices that can control the structural features of a large number of brake disks per time unit. Concerning this, it is known about devices that can measure in a fast and efficient way some structural features of brake disks. These devices comprise a disk support on which a centering bushing is placed, which bushing engages with the disk hole and positions correctly the disk onto its support. The disk is thus made integral with the support through a spindle clamping together disk, centering bushing and support.

Geometrical features of the disk, such as for instance thickness and planarity but not diameter of keying hole, are measured by rotating the support and thus causing disk rotation around an axis crossing the hole center. The aforesaid measurements can be carried out by bringing near suitable sensors contacting the rotating disk.

It is also known about devices, known as friction devices, which can measure in short times the diameter of the hole of a brake disk. A first device of the latter type comprises a stationary support for the brake disk and a magnetic spindle which is blocked on the disk. The spindle is rotated by rotating the disk. A contact probe, integral with the stationary assembly, engages into the disk hole and creeps against the walls of the holes of the rotating disk, thus measuring the geometrical features of the hole.

In a second friction device, a spindle having a stem coaxial to the disk hole is inserted inside a stationary disk support. This stem projects from the stationary support and connects the disk to the spindle through a connecting arm. By rotating the spindle, the brake disk is rotated with respect to the stationary support around the axis crossing the hole center. Here again, one or more probes integral with the stationary support engage into the disk hole and measure its structure.

It is also known from Document EP 0 327 670 a gaging head assembly for use on dial bore gages and the like including an elongated tubular member, having an opening extending therethrough, and an adjustment member positioned for axial movement in this opening. This adjustment member has a tapered end portion located inwardly of pairs of opposed work engaging elements, adjacent to the second end portion of the tubular member, to simultaneously engage and radially move one pair of opposed work engaging elements during the axial movements thereof while the other opposite pair centralizes the gaging elements to assure that they are located on a diameter of the work surface to be gaged.

Moreover, Document US 4 288 924 shows a device comprising a spindle within a tubular body and a pair of opposed levers pivotally mounted to the tubular body which is provided for axially displacing the spindle with respect to the tubular body upon manual application of a compressive force on the pair of levers.

Eventually, Document DE 24 62 156 shows a device to measure the inside diameters of drillings comprising a tubular body and a spindle axially movable inside this body. The body has a conic end portion where at least two ball are located to move crosswise to the body's axis by means of the spindle. The spindle also connects the tubular body with a measurement device.

The Applicant has found that devices at the state of the art can be improved under several points of view, in particular as far as their ability to measure the geometrical features of the hole of a brake disk is concerned.

As a matter of fact, in order to obtain a measurement of the structure, and in particular of the diameter of the hole of a brake disk, in the devices at the state of the art there is a reciprocal friction between brake disk and support on which the latter rests.

The disk can therefore be partially or totally damaged by the friction it undergoes. Moreover, if the walls of the hole whose geometrical features have to be defined are particularly irregular, for instance due to machining faults, the contact probe or probes for hole measurement can be damaged and measures cannot be reliable enough. More to the point, if the hole of the brake disk is even slightly oval, contact probes give out a value related to the diameter of the circumference with the maximum radius to be inscribed into the hole only after a convenient and quite complex interpolation of acquired data. Furthermore, in this case mistakes whose extent is inversely proportional to the number of points available for interpolation, and therefore to measuring time, are introduced into the measure. Eventually, devices at the state of the art using a spindle or a magnetic arm for rotating the brake disk can be used only with brake disks made of ferromagnetic materials.

Under these circumstances, the technical task underlying the present invention is to conceive a device for measuring the hole of a brake disk and a method for carrying out said measurement that can obviate the aforesaid drawbacks. An important aim of the invention is to propose a device for measuring the hole of a brake disk and a method for carrying out said measurement in which no reciprocal friction occurs between disk and disk support. A further aim of the present invention is to carry out a device and a method for measuring the hole of a brake disk that can define in a simple and reliable way the diameter of the circumference having the maximum radius to be inscribed into the hole. Moreover, an aim of the present invention is to obtain a device and a method for measuring the hole of a brake disk that can ensure a high repeatability of measurements under examination. A final aim of the present invention is to carry out a device for measuring the hole of a brake disk and a method for carrying out said measurement that can operate whatever the material the brake disk is made of.

The technical task and the aims referred to above are basically achieved by a device and a method for measuring the hole of a brake disk, characterized in that it comprises one or more technical solutions as claimed below.

The invention is defined in the appended claims.

The following contains a merely indicative and therefore non-limiting description of a preferred though not exclusive embodiment of a device and method for measuring the hole of a brake disk as shown in the accompanying drawings, in which:
- Figure 1 shows a lateral view of a device for measuring the hole of a brake disk according to the present invention;
- Figure 2 shows a section according to plane II-II of the device of Figure 1;
- Figure 3 shows a perspective view of an element of the device of Fig. 1;
- Figure 4 shows some elements of the section of Figure 2 in a first operating position;
- Figure 5 shows the elements of Figure 4 in a second operating position.

With reference to the aforesaid figures, a device for measuring the structural features of a brake disk hole was referred to with number 1.

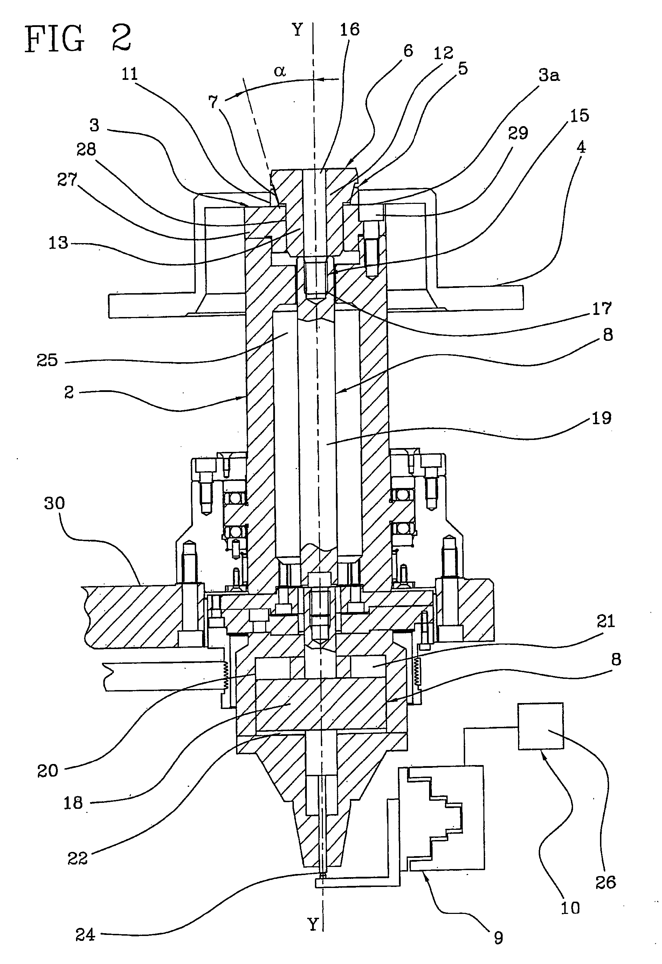

Referring in particular to the section of Figure 2, the device 1 comprises a body 2 with at least one flat surface 3. Said flat surface 3 defines a bearing plane 3a for a brake disk 4 equipped with a keying hole 4a. The device 1 further comprises an elastic caliper 5 that can be expanded radially on a plane parallel to the bearing plane 3a. A spindle 6 is engaged with the elastic caliper 5 according to a surface 7 inclined of a given angle "α" with respect to a translation axis (Y) perpendicular to the bearing plane 3a. The spindle 6 can be shifted along translation axis "Y" between a first reference position, in which the spindle 6 simply rests on the elastic caliper, and a second position of radial expansion of the elastic caliper inside the keying hole 4a, in which the spindle 6 is pushed into the elastic caliper 5.

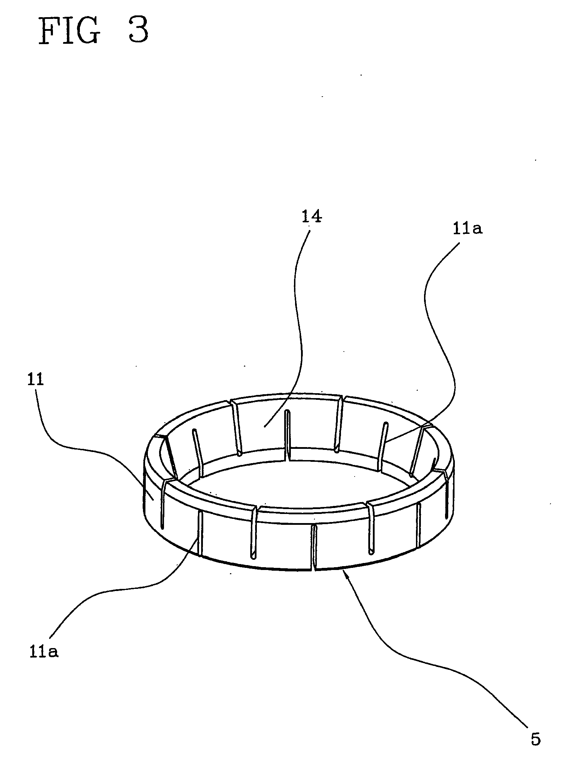

Moreover, the device 1 comprises translation means 8 for shifting the spindle 6 between the first and the second position, means 9 for measuring the translation of the spindle 6 along translation axis "Y" and means 10 for converting the measure of translation of the spindle 6 into a measure of radial expansion of the elastic caliper 5. Advantageously, as is shown in Figure 3, the elastic caliper 5 has a basically annular development and has an outer surface 11 for the engagement with the brake disk hole. Said outer surface 11 is basically cylindrical for engaging into and adhering to the disk hole.

In order to reduce the stiffness of the elastic caliper 5 on its expansion plane, the elastic caliper 5 further comprises a plurality of notches, preferably through notches, parallel to translation axis "Y".

As a matter of fact, when the spindle 6 is pushed into the elastic caliper 5, a force acting along a direction parallel to axis "Y" is transmitted to the elastic caliper 5. The coupling along the inclined surface 7 between spindle 6 and elastic caliper 5 resolves this force along a direction parallel to the inclined surface 7 and a direction parallel to the expansion plane of the elastic caliper 5.

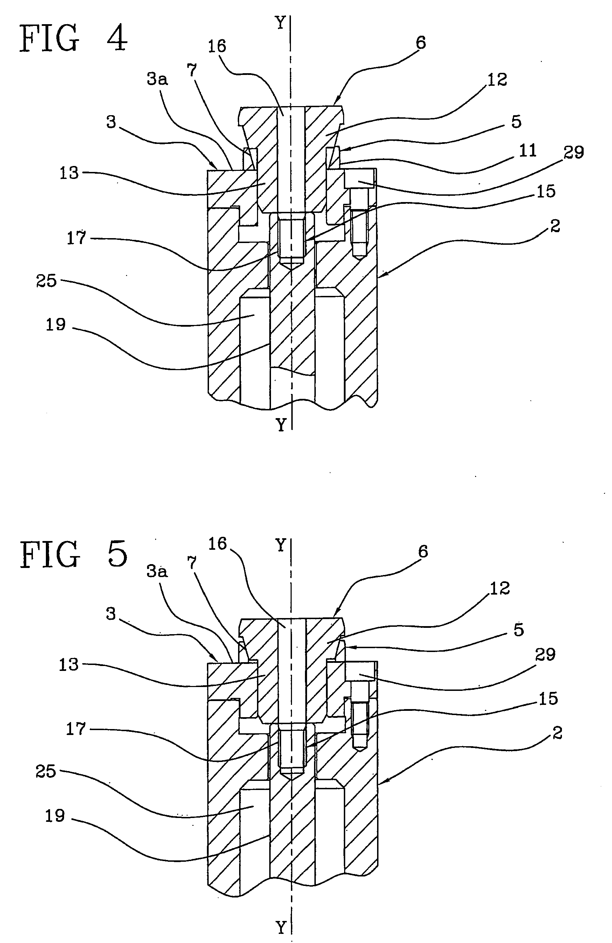

The higher pliability of the elastic caliper 5 on the plane parallel to the bearing plane 3a with respect to all other directions enables the elastic caliper 5 to deform elastically by expanding radially, as shown schematically in Figures 4 and 5. The spindle 6 is made up of a first portion 12, basically shaped like a truncated cone, and of a second portion 13, basically cylindrical. The first truncated cone portion 12 defines the surface 7 inclined of an angle "α" with respect to axis "Y" and engages with the elastic caliper 5.

The elastic caliper 5 has an inner surface 14 designed to engage with the truncated cone portion 12 of the spindle 6 and preferably matching said truncated cone portion 12.

The cylindrical portion 13 of the spindle 6 can be inserted at least partially into the body 2 according to a direction corresponding to translation axis "Y". Advantageously, both the size of the spindle 6 and the size of the elastic caliper 5 are checked previously.

The device 1 further comprises mechanical connection means 15 acting between the spindle 6 and the translation means 8. Said mechanical connection means 15 comprise a through hole 16 made into the hole 6 and coaxial to axis "Y". Said hole 16 is engaged by at least one bolt or screw engaging into a blind hole 17 made into the translation means 8. Advantageously, the translation means comprise a piston 18, a stem 19 coaxial with translation axis "Y" of the spindle 6 and a cylinder 20. The cylinder 20 is placed on the opposite end of the body 2 with respect to the bearing plane 3a and houses the piston 18. The stem 19 is connected on one of its ends to the piston 18 and on its other end it is provided with the blind hole 17. The translation means further comprise two chambers; the first chamber 21 is defined by the space existing between cylinder 20, piston 18 and stem 19 and is thus basically toroidal in shape, the second chamber 22 is obtained in the cylinder 20 and put in communication with the portion of piston 18 not included in the first chamber 21. The aforesaid chambers 21, 22 contain a working fluid, preferably a non-compressible fluid, controlling the shifting of the piston 18 when put under pressure by a suitable compressor.

Advantageously, the means 9 for measuring the translation of the spindle 6 comprise an electronic probe 24 integral with the spindle 6. In particular, the electronic probe 24 is put in contact with the piston 18 and it is preferably coaxial with the stem 19, so as to obtain as accurate measurements as possible. As a matter of fact, the body 2 has a basically cylindrical development and has a through hole 25 for housing at least partially the translation means 8, i.e. the stem 19. According to the cinematic chain thus obtained, the spindle 6, the stem 19, the piston 18 and the electronic probe 24 are lined up on the same axis, preferably axis "Y", so that the mechanical stiffness of the measuring chain is as high as possible. Preferably, the electronic probe 24 is a feeler.

The means 19 for converting the measure of translation into a measure of expansion of the elastic caliper 5 include a processing unit 26 having at least two input values and at least one output value. The two input values are angle "α" and the measure of translation of the spindle 6, whereas the output value is the measure of radial expansion of the elastic caliper 5. The processing unit 26 calculates the measure of radial expansion of the elastic caliper 5 through simple trigonometric functions between angle "α" and measure of translation of the spindle 6.

The body 2 comprises a terminal element 27 having a flat surface defining the bearing plane 3a and a central through hole 28 designed to house at least a part of the spindle 6, the terminal element 27 is connected to the body 2 through mechanical connections 29. Said mechanical connections 29 are preferably at least a screw or at least a bolt. The device 1 further comprises a bearing plate 30 for the body 2. The body 2 is turnably connected to the bearing plate 30 according to a rotation axis corresponding to translation axis "Y". Moreover, the device 1 includes means for rotating the body 2 with respect to the bearing plate 30. These means comprise for instance an electric motor.

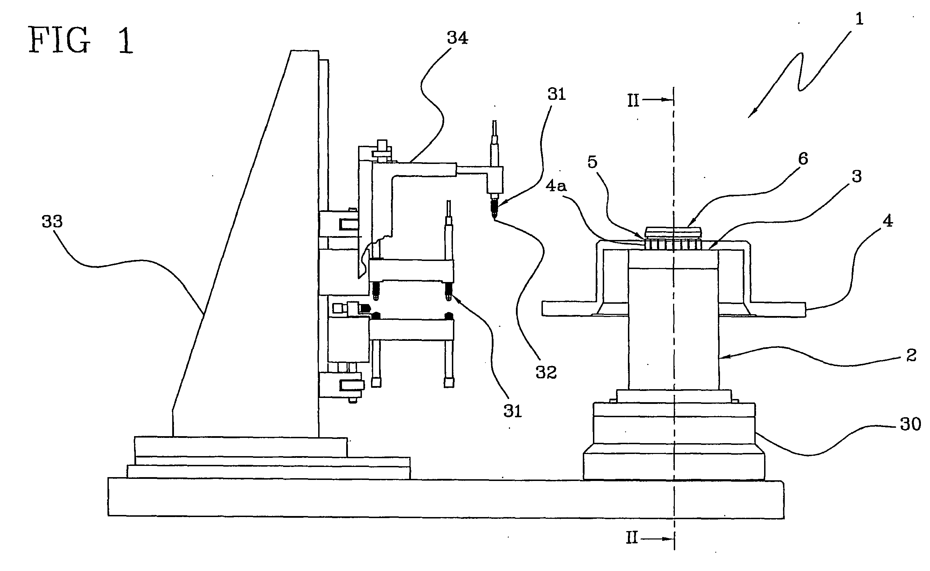

Advantageously, the device 1 further comprises sensor means 31 for measuring at least another structural feature of the disk, such as for instance thickness or planarity, as shown schematically in Figure 1.

The device 1 further comprises a column 33, which can be shifted with respect to the body 2 on a plane perpendicular to translation axis "Y" of the spindle 6. The column 33 comprises at least one sensor-holder arm 34, which can be shifted in a parallel direction with respect to translation axis "Y" and rotated around in the same direction.

Advantageously, the sensor means 31 are connected to the sensor-holder arm 34.

The sensor means 31 can be arranged near the disk so as to measure both the hole and planarity and thickness. The sensor means 31 are held in their correct position thanks to the prop provided by the sensor-holder arm 34 and by the column 33.

The sensor means 31 comprise at least one contact sensor 32, preferably a plurality of contact sensors 32.

As an alternative, the sensor means 31 comprise an electromagnetic wave emitter, a reflected wave receiver and a processing unit for determining the distance of the sensor from the disk.

The present invention further comprises a method for measuring the hole of a disk according to the device disclosed above.

Said method comprises a step of arranging the body 2 with a flat surface 3 for bearing 3a a brake disk.

Moreover, the method further comprises the steps of arranging the elastic caliper 5, which can be expanded radially on a parallel plane with respect to the bearing plane 3a; inserting the spindle 6, having a surface 7 inclined of a given angle "α" with respect to axis "Y", into the elastic caliper 5; shifting along translation axis "Y" perpendicular to the bearing plane 3a, the spindle 6 between a reference position and a position of radial expansion of the elastic caliper 5, measuring the translation of the spindle 6 and converting said measure of translation of the spindle 6 into a measure of radial expansion of the elastic caliper 5.

The present invention enables to achieve important advantages.

First of all, the invention allows to measure the hole of a brake disk without necessarily creeping against any surface.

As a matter of fact, the disk is fastened to the body 2 defining the bearing surface by means of the spindle 6, thus making the disk integral with the body 2.

Moreover, the device 1 according to the present invention enables to determine in a simple and reliable manner the diameter of the circumference with maximum radius that can be inscribed inside the hole.

As a matter of fact, when the elastic caliper 5 expands on a parallel plane with respect to the bearing plane 3a, it adheres to the walls of the disk hole thanks to its annular shape. The measure of its radial expansion corresponds univocally to the diameter of the circumference with maximum radius that can be inscribed inside the hole.

More to the point, the present invention ensures a high repeatability of the measurements referred to. As a matter of fact, since no frictions occur between the various elements, and in particular between spindle 6, elastic caliper 5 and disk, there are no problems of wear and tear requiring frequent system recalibrations.

Furthermore, the spindle 6 blocking the disk onto the support 2 avoids any oscillation of the disk when the latter is rotated, thus ensuring an accurate measurement also of the other geometrical features of the disk.

Eventually, the device 1 does not require any particular property of the material the disk is made of.

## Claims

1. Device for measuring the hole of a brake disk, comprising:
a body (2),
an elastic caliper (5),
a spindle (6),
translation means (8) for shifting the spindle (6) between a first and a second position,
means (9) for measuring a shift of the spindle (10),
means (10) for converting a measure of translation of the spindle (6) into a measure of radial expansion of the elastic caliper (5);
wherein:
said body (2) has at least one flat surface (3) defining a bearing plane (3a) for the brake disk (4) provided with a keying hole (4a);
said elastic caliper (5) can be expanded radially on a parallel plane with respect to the bearing plane (3a) ;
said spindle (6) can be shifted along a translation axis (Y) perpendicular to the bearing plane (3a) between said first reference position and said second position of radial expansion of the elastic caliper (5) inside the keying hole (4a) in which second position said disk (4) is fastened to said body (2) by means of said spindle (6) to make said disk (4) integral with the body (2);
it further comprises a bearing plate (30) for the body (2), said body (2) being turnably connected to said plate (30) according to an axis corresponding to translation axis (Y).

2. Device according to claim 1, **characterized in that** said spindle (6) is engaged with the elastic caliper (5) according to a surface (7) inclined of a given angle (α) with respect to said translation axis (Y).

3. Device according to claim 1 or 2, **characterized in that** the elastic caliper (5) has an annular development defining an outer surface (11) for the engagement with the hole of a brake disk and an inner surface (14) for the engagement with said spindle (6).

4. Device according to claim 1, 2 or 3, **characterized in that** the elastic caliper (5) has a plurality of notches (11a) parallel to translation axis (Y) of the spindle (6).

5. Device according to any of the claims 1 to 4,
**characterized in that** the outer surface (11) of the elastic caliper (5) is a cylindrical surface.

6. Device according to any of the claims 1 to 5, **characterized in that** the spindle (6) is made up of a first truncated cone portion (12) defining a surface (7) inclined of an angle (α) with respect to axis (Y), and of a second cylindrical portion (13); the truncated cone portion (12) engaging with the elastic caliper (5); the cylindrical portion (13) being at least partially inserted into the body (2).

7. Device according to claim 6, **characterized in that** the inner surface (14) of the elastic caliper (5) matches the truncated cone portion (12) of the spindle (6).

8. Device according to any of the preceding claims, **characterized in that** it comprises mechanical connection means (15) acting between the spindle (6) and the translation means (8).

9. Device according to claim 8, **characterized in that** said mechanical connection means (15) comprise at least a bolt engaged with the translation means (8) into a through hole (16) inside the spindle (6) coaxial with translation axis (Y).

10. Device according to any of the preceding claims, **characterized in that** the translation means (8) comprise a piston (18); a stem (19) coaxial with translation axis (Y) of the spindle (6) and integral with the piston (18); a cylinder (20) containing the piston (18) placed on the opposite side of the body (2) with respect to the side with the bearing plane (3a).

11. Device according to any of the preceding claims, **characterized in that** the means (9) for measuring the translation of the spindle (6) comprise an electronic probe (24) integral with the spindle (6).

12. Device according to claim 11, **characterized in that** said electronic probe (24) is a feeler.

13. Device according to claims 10 and 11, **characterized in that** said electronic probe (24) is connected to the piston (18).

14. Device according to any of the preceding claims, **characterized in that** the means (10) for converting the measure of translation into a measure of expansion of the elastic caliper (5) comprise a processing unit (26) having at least two input values and at least one output value.

15. Device according to claim 14, **characterized in that** said at least two input values are angle (α) and the measure of translation of the spindle (6); said at least one output value being the measure of radial expansion of the elastic caliper (5).

16. Device according to claim 10, **characterized in that** the translation means (8) further comprise a first toroidal chamber (21) defined between the piston (18), the stem (19) and the cylinder (20) and a working fluid for pressurizing said chamber (21).

17. Device according to claims 10 or 16, **characterized in that** the translation means (8) further comprise a second chamber (22) defined between the piston (18) and the cylinder (20) and a working fluid for pressurizing said chamber (22).

18. Device according to any of the preceding claims, **characterized in that** the body (2) has a cylindrical development and is provided with a through hole (25) designed to house at least partially the translation means (8).

19. Device according to claim 18, **characterized in that** the body (2) comprises a terminal element (27) having a flat surface defining the bearing plane (3a) for the brake disk (4); said terminal element (27) having a central through hole (28) designed to house at least a part of the spindle (6) and being connected to the body (2) through mechanical connections (29).

20. Device according to claims 10 and 18, **characterized in that** said stem (19) is inserted coaxially into said through hole (25) of the body (2).

21. Device according to any of the preceding claims, **characterized in that** it further comprises means for rotating the body (2) with respect to said plate (30).

22. Device according to any of the preceding claims, **characterized in that** it further comprises sensor means (31) for measuring at least another structural property of the disk.

23. Device according to claim 22, **characterized in that** it further comprises a column (33), which can be shifted with respect to the body (2) on a plane perpendicular to translation axis (Y) of the spindle (6); the column (33) comprising at least one sensor-holder arm (34), which can be shifted in a parallel direction with respect to translation axis (Y) and rotated around in the same direction; said sensor means (31) being connected to the sensor-holder arm (34).

24. Device according to claims 22 or 23, **characterized in that** said sensor means (31) comprises at least one contact sensor (32).

25. Device according to claims 22 or 23, **characterized in that** said sensor means (31) comprises a plurality of contact sensors (32).

26. Device according to any of the claims 22 to 25, **characterized in that** said sensor means (31) comprise an electromagnetic wave emitter, a reflected wave receiver and a processing unit.

27. Method for measuring the hole of a brake disk, comprising the step of:
arranging an elastic caliper (5),
inserting a spindle (6),
shifting the spindle (6) between a first reference position and a second position of radial expansion of the elastic caliper (5) inside the hole (4a), along a translation axis (Y),
measuring the translation of the spindle (6),
converting said measure of translation of the spindle (6) into a measure of radial expansion of the elastic caliper (5);
wherein:
it further comprises the step of arranging a body (2) with a flat bearing surface (3a) for the brake disk provided with a keying hole (4a), said body (2) being turnably connected to a bearing plate (30) according to an axis corresponding to transation axis (Y);
said elastic caliper (5) can be expanded radially on a parallel plane with respect to the bearing plane (3a);
said spindle (6) has a surface (7) inclined of a given angle (α) with respect to a direction orthogonal to the bearing plane (3a), into said elastic caliper (5);
in said second position said disk (4) is fastened to said body (2) by means of said spindle (6) to make said disk (4) integral with the body (2);
said translation axis (Y) is perpendicular to the bearing plane (3a).

## Patentansprüche

1. Vorrichtung zur Messung des Lochs einer Bremsscheibe, umfassend:
einen Körper (2),
eine elastische Lehre (5),
einen Spindel (6),
Translationsmittel (8) zur Verschiebung des Spindels (6) zwischen einer ersten und einer zweiten Stellung,
Mittel (9) zur Messung einer Verschiebung des Spindels (10),
Mittel (10) zur Umwandlung eines Translationsmaßes des Spindels (6) in ein Radialausdehnungsmaß der elastischen Lehre (5),
worin:
der benannte Körper (2) mindestens eine flache Oberfläche (3) aufweist, die eine Tragebene (3a) für die mit einem Verkeilungsloch (4a) ausgestattete Bremsscheibe (4) definiert;
die benannte elastische Lehre (5) in einer zur Tragebene (3a) parallelen Ebene radial ausgedehnt werden kann;
der benannte Spindel (6) entlang einer zur Tragebene (3a) parallelen Translationsachse (Y) zwischen der benannten ersten Bezugsstellung und der benannten zweiten Stellung von radialer Ausdehnung der elastischen Lehre (5) im Verkeilungsloch (4a) verschoben werden kann, wobei in der zweiten Stellung die benannte Scheibe (4) am Körper (2) durch den benannten Spindel (6) befestigt ist, so daß die benannte Scheibe (4) einteilig mit dem Körper (2) wird;
sie eine Tragplatte (30) für den Körper (2) weiter umfasst, wobei der benannte Körper (2) mit der benannten Platte (30) nach einer Achse entsprechend der Translationsachse (Y) drehbar verbunden ist.

2. Vorrichtung nach Anspruch 1, **dadurch gekennzeichnet, daß** der benannte Spindel (6) mit der elastischen Lehre (5) nach einer Oberfläche (7), die zur benannten Translationsachse (Y) mit einem bestimmten Winkel (α) geneigt ist, eingegriffen ist.

3. Vorrichtung nach Anspruch 1 oder 2, **dadurch gekennzeichnet, daß** die elastische Lehre (5) eine ringförmige Entwicklung aufweist, die eine Außenoberfläche (11) zum Eingriff mit dem Loch einer Bremsscheibe und eine Innenoberfläche (14) zum Eingriff mit dem benannten Spindel (6) definiert.

4. Vorrichtung nach Anspruch 1, 2 oder 3, **dadurch gekennzeichnet, daß** die elastische Lehre (5) eine Vielzahl von Kerben (11a) parallel zur Translationsachse (Y) des Spindels (6) aufweist.

5. Vorrichtung nach irgendeinem der Ansprüche 1 bis 4, **dadurch gekennzeichnet, daß** die Außenoberfläche (11) der elastischen Lehre (5) eine zylindrische Oberfläche ist.

6. Vorrichtung nach irgendeinem der Ansprüche 1 bis 5, **dadurch gekennzeichnet, daß** der Spindel (6) aus einem ersten Kegelstumpfteil (12), der eine zur Achse (Y) mit einem Winkel (α) geneigte Oberfläche (7) definiert, und aus einem zweiten Zylinderteil (13) besteht; wobei der Kegelstumpfteil (12) mit der elastischen Lehre (5) eingreift; wobei der Zylinderteil (13) in den Körper (2) mindestens teilweise eingeführt ist.

7. Vorrichtung nach Anspruch 6, **dadurch gekennzeichnet, daß** die Innenoberfläche (14) der elastischen Lehre (5) dem Kegelstumpfteil (12) des Spindels (6) entspricht.

8. Vorrichtung nach irgendeinem der vorhergehenden Ansprüche, **dadurch gekennzeichnet, daß** sie mechanische Verbindungsmittel (15) umfasst, die zwischen dem Spindel (6) und den Translationsmitteln (8) wirken.

9. Vorrichtung nach Anspruch 8, **dadurch gekennzeichnet, daß** die mechanischen Verbindungsmittel (15) mindestens einen Bolzen umfassen, die mit den Translationsmitteln (8) in ein mit der Translationsachse (Y) koaxialen Durchloch (16) im Spindel (6) eingegriffen ist.

10. Vorrichtung nach irgendeinem der vorhergehenden Ansprüche, **dadurch gekennzeichnet, daß** die Translationsmittel (8) einen Kolben (18); einen Schaft (19), der koaxial mit der Translationsachse (Y) des Spindels (6) und einteilig mit dem Kolben (18) ist; einen Zylinder (20), der den Kolben (19) an der entgegengesetzten Seite des Körpers (2) zur Seite mit der Tragebene (3a) enthält, umfassen.

11. Vorrichtung nach irgendeinem der vorhergehenden Ansprüche, **dadurch gekennzeichnet, daß** die Mittel (9) zur Messung der Translation des Spindels (6) eine elektronische Sonde (24), die einteilig mit dem Spindel (6) ist, umfassen.

12. Vorrichtung nach Anspruch 11, **dadurch gekennzeichnet, daß** die benannte elektronische Sonde (24) ein Fühler ist.

13. Vorrichtung nach den Ansprüchen 10 und 11, **dadurch gekennzeichnet, daß** die benannte elektronische Sonde (24) mit dem Kolben (18) verbunden ist.

14. Vorrichtung nach irgendeinem der vorhergehenden Ansprüche, **dadurch gekennzeichnet, daß** die Mittel (10) zur Umwandlung des Translationsmaßes in ein Ausdehnungsmaß der elastischen Lehre (5) eine Verarbeitungseinheit (26) mit mindestens zwei Eingangswerten und mindestens einem Ausgangswert umfassen.

15. Vorrichtung nach Anspruch 14, **dadurch gekennzeichnet, daß** die benannten mindestens zwei Eingangswerte der Winkel (α) und das Translationsmaß des Spindels (6) sind; wobei der benannte mindestens eine Ausgangswert das Maß von radialer Ausdehnung der elastischen Lehre (5) ist.

16. Vorrichtung nach Anspruch 10, **dadurch gekennzeichnet, daß** die Translationsmittel (8) einen ersten Toroidalabteil (21), der zwischen dem Kolben (18), dem Schaft (19) und dem Zylinder (20) definiert ist, und eine Betriebsflüssigkeit weiter umfassen, um den benannten Abteil (21) unter Druck zu setzen.

17. Vorrichtung nach den Ansprüchen 10 oder 16, **dadurch gekennzeichnet, daß** die Translationsmittel (8) einen zweiten Abteil (22), der zwischen dem Kolben (18) und dem Zylinder (20) definiert ist, und eine Betriebsflüssigkeit weiter umfassen, um den benannten Abteil (22) unter Druck zu setzen.

18. Vorrichtung nach irgendeinem der vorhergehenden Ansprüche, **dadurch gekennzeichnet, daß** der Körper (2) eine zylindrische Entwicklung aufweist und mit einem Durchgangsloch (25) zur mindestens teilweisen Aufnahme der Translationsmittel (8) ausgestattet ist.

19. Vorrichtung nach Anspruch 18, **dadurch gekennzeichnet, daß** der Körper (2) ein Endelement (27) mit einer die Tragebene (3a) für die Bremsscheibe (4) definierenden, flachen Oberfläche umfasst; wobei das benannte Endelement (27) ein mittleres Durchgangsloch (28) zur Aufnahme mindestens eines Teils des Spindels (6) aufweist und mit dem Körper (2) durch mechanische Verbindungen (29) verbunden ist.

20. Vorrichtung nach den Ansprüchen 10 und 18, **dadurch gekennzeichnet, daß** der benannte Schaft (19) ins benannte Durchgangsloch (25) des Körpers (2) koaxial eingeführt ist.

21. Vorrichtung nach irgendeinem der vorhergehenden Ansprüche, **dadurch gekennzeichnet, daß** sie Mittel zur Drehung des Körpers (2) zur benannten Platte (30) weiter umfasst.

22. Vorrichtung nach irgendeinem der vorhergehenden Ansprüche, **dadurch gekennzeichnet, daß** sie Sensormittel (31) zur Messung mindestens einer anderen strukturellen Eigenschaft der Scheibe weiter umfasst.

23. Vorrichtung nach Anspruch 22, **dadurch gekennzeichnet, daß** sie eine Säule (33) weiter umfasst, die zum Körper (2) in einer Ebene orthogonal zur Translationsachse (Y) des Spindels (6) verschoben werden kann; wobei die Säule (33) mindestens einen Sensortragarm (34) umfasst, der in paralleler Richtung zur Translationsachse (Y) verschoben und in derselben Richtung gedreht werden kann; wobei die benannten Sensormittel (31) mit dem Sensortragarm (34) verbunden sind.

24. Vorrichtung nach den Ansprüchen 22 oder 23, **dadurch gekennzeichnet** die benannten Sensormittel (31) mindestens einen Berührungssensor (32) umfassen.

25. Vorrichtung nach den Ansprüchen 22 oder 23, **dadurch gekennzeichnet** die benannten Sensormittel (31) eine Vielzahl von Berührungssensoren (32) umfassen.

26. Vorrichtung nach irgendeinem der Ansprüche 22 bis 25, **dadurch gekennzeichnet, daß** die benannten Sensormittel (31) einen Sender von elektromagnetischen Wellen, einen Empfänger von Echowellen und eine Verarbeitungseinheit umfassen.

27. Verfahren zur Messung des Lochs einer Bremsscheibe, umfassend die folgenden Schritte:
Anordnung einer elastischen Lehre (5),
Einführung eines Spindels (6),
Verschiebung des Spindels (6) zwischen einer ersten Bezugsstellung und einer zweiten Stellung von radialer Ausdehnung der elastischen Lehre (5) im Loch (4a) entlang einer Translationsachse (Y),
Messung der Translation des Spindels (6),
Umwandlung des benannten Translationsmaßes des Spindels (6) in ein Radialausdehnungsmaß der elastischen Lehre (5);
worin:
es den Schritt weiter umfasst, bei dem ein Körper (2) mit einer flachen Tragoberfläche (3a) für die mit einem Verkeilungsloch (4a) ausgestattete Bremsscheibe (4) angeordnet wird, wobei der benannte Körper (2) mit einer Tragplatte (30) nach einer Achse entsprechend der Translationsachse (Y) drehbar verbunden ist;
die benannte elastische Lehre (5) in einer zur Tragebene (3a) parallelen Ebene radial ausgedehnt werden kann;
der benannte Spindel (6) eine Oberfläche (7) aufweist, die in einer zur Tragebene (3a) orthogonalen Richtung mit einem bestimmten Winkel (α) in der benannten elastischen Lehre (5) geneigt ist;
in der benannten zweiten Stellung die benannte Scheibe am benannten Körper (2) durch den benannten Spindel (6) befestigt ist, so daß die benannte Scheibe (4) einteilig mit dem Körper (2) wird;
die benannte Translationsachse (Y) orthogonal zur Tragebene (3a) ist.

## Revendications

1. Dispositif pour mesurer le trou d'un disque de frein, comprenant:
un corps (2),
un calibre élastique (5),
un mandrin (6),
des moyens de translation (8) pour déplacer le mandrin (6) entre une première et une deuxième position,
des moyens (9) pour mesurer un déplacement du mandrin (10),
des moyens (10) pour convertir une mesure de translation du mandrin (6) dans une mesure d'expansion radiale du calibre élastique (5);
dans lequel:
ledit corps (2) présente au moins une surface plate (3) définissant un plan de support (3a) pour le disque de frein (4) muni d'un trou de clavetage (4a);
ledit calibre élastique (5) peut être expansé radialement sur un plan parallèle par rapport au plan de support (3a);
ledit mandrin (6) peut être déplacé le long d'un axe de translation (Y) perpendiculaire au plan de support (3a) entre ladite première position de repère et ladite deuxième position d'expansion radiale du calibre élastique (5) dans le trou de clavetage (4a), dans la deuxième position ledit disque (4) étant fixé audit corps (2) au moyen dudit mandrin (6) afin que ledit disque (4) soit solidaire au corps (2);
il comprend en outre une plaque de support (30) pour le corps (2), ledit corps (2) étant relié de façon tournante à ladite plaque (30) selon un axe correspondant à l'axe de translation (Y).

2. Dispositif selon la revendication 1, **caractérisé en ce que** ledit mandrin (6) est engagé avec le calibre élastique (5) selon une surface (7) inclinée d'un angle donné (α) par rapport audit axe de translation (Y).

3. Dispositif selon la revendication 1 ou 2, **caractérisé en ce que** le calibre élastique (5) a un développement annulaire définissant une surface externe (11) pour l'engagement avec le trou d'un disque de frein, et une surface interne (14) pour l'engagement avec ledit mandrin (6).

4. Dispositif selon la revendication 1, 2 ou 3, **caractérisé en ce que** le calibre élastique (5) présente une pluralité de crans (11a) parallèles à l'axe de translation (Y) du mandrin (6).

5. Dispositif selon une quelconque des revendications 1 à 4, **caractérisé en ce que** la surface externe (11) du calibre élastique (5) est une surface cylindrique.

6. Dispositif selon une quelconque des revendications 1 à 5, **caractérisé en ce que** le mandrin (6) se compose d'une première portion en tronc de cône (12) définissant une surface (7) inclinée d'un angle (α) par rapport à l'axe (Y), et d'une deuxième portion cylindrique (13); la portion en tronc de cône (12) s'engageant avec le calibre élastique (5); la portion cylindrique (13) étant au moins partiellement insérée dans le corps (2).

7. Dispositif selon la revendication 6, **caractérisé en ce que** la surface interne (14) du calibre élastique (5) correspond à la portion en tronc de cône (12) du mandrin (6).

8. Dispositif selon une quelconque des revendications précédentes, **caractérisé en ce que** il comprend des moyens de connexion mécanique (15) agissant entre le mandrin (6) et les moyens de translation (8).

9. Dispositif selon la revendication 8, **caractérisé en ce que** lesdits moyens de connexion mécanique (15) comprennent au moins un boulon engagé avec les moyens de translation (8) dans un trou passant (16) à l'intérieur du mandrin (6) coaxial avec l'axe de translation (Y).

10. Dispositif selon une quelconque des revendications précédentes, **caractérisé en ce que** les moyens de translation (8) comprennent un piston (18); une tige (19) coaxiale avec l'axe de translation (Y) du mandrin (6) et solidaire avec le piston (18); un cylindre (20) contenant le piston (18) logé sur le côté opposé du corps (2) par rapport au côté avec la plaque de support (3a).

11. Dispositif selon une quelconque des revendications précédentes, **caractérisé en ce que** les moyens (9) pour mesurer la translation du mandrin (6) comprennent une sonde électronique (24) solidaire au mandrin (6).

12. Dispositif selon la revendication 11, **caractérisé en ce que** ladite sonde électronique (24) est un palpeur.

13. Dispositif selon les revendications 10 et 11, **caractérisé en ce que** ladite sonde électronique (24) est reliée au piston (18).

14. Dispositif selon une quelconque des revendications précédentes, **caractérisé en ce que** les moyens (10) pour convertir la mesure de translation dans une mesure d'expansion du calibre élastique (5) comprennent une unité de traitement (26) ayant au moins deux valeurs d'entrée et au moins une valeur de sortie.

15. Dispositif selon la revendication 14, **caractérisé en ce que** lesdites au moins deux valeurs d'entrée sont l'angle (α) et la mesure de translation du mandrin (6); ladite au moins une valeur de sortie étant la mesure d'expansion radiale du calibre élastique (5).

16. Dispositif selon la revendication 10, **caractérisé en ce que** les moyens de translation (8) comprennent en plus un premier compartiment toroïdal (21) défini entre le piston (18), la tige (19) et le cylindre (20), et un fluide opérationnel pour pressuriser ledit compartiment (21).

17. Dispositif selon les revendications 10 ou 16, **caractérisé en ce que** les moyens de translation (8) comprennent en plus un deuxième compartiment (22) défini entre le piston (18) et le cylindre (20), et un fluide opérationnel pour pressuriser ledit compartiment (22).

18. Dispositif selon une quelconque des revendications précédentes, **caractérisé en ce que** le corps (2) a un développement cylindrique et est muni d'un trou passant (25) apte à loger au moins partiellement les moyens de translation (8).

19. Dispositif selon la revendication 18, **caractérisé en ce que** le corps (2) comprend un élément terminal (27) ayant une surface plate définissant le plan de support (3a) pour le disque de frein (4); ledit élément terminal (27) ayant un trou passant central (28) apte à loger au moins une partie du mandrin (6) et étant relié au corps (2) au moyen de connexions mécaniques (29).

20. Dispositif selon les revendications 10 et 18, **caractérisé en ce que** ladite tige (19) est insérée de façon coaxiale dans ledit trou passant (25) du corps (2).

21. Dispositif selon une quelconque des revendications précédentes, **caractérisé en ce que** il comprend en plus des moyens pour tourner le corps (2) par rapport à ladite plaque (30).

22. Dispositif selon une quelconque des revendications précédentes, **caractérisé en ce que** il comprend en plus des moyens senseurs (31) pour mesurer au moins une autre propriété structurelle du disque.

23. Dispositif selon la revendication 22, **caractérisé en ce que** il comprend en plus une colonne (33) pouvant être déplacée par rapport au corps (2) sur un plan perpendiculaire à l'axe de translation (Y) du mandrin (6); la colonne (33) comprenant au moins un bras porte-senseur (34) pouvant être déplacé dans une direction parallèle par rapport à l'axe de translation (Y) et tourné dans la même direction; lesdits moyens senseurs (31) étant reliés au bras porte-senseur (34).

24. Dispositif selon les revendications 22 ou 23, **caractérisé en ce que** lesdits moyens senseurs (31) comprennent au moins un senseur de contact (32).

25. Dispositif selon les revendications 22 ou 23, **caractérisé en ce que** lesdits moyens senseurs (31) comprennent une pluralité de senseurs de contact (32).

26. Dispositif selon une quelconque des revendications 22 à 25, **caractérisé en ce que** lesdits moyens senseurs (31) comprennent un émetteur d'ondes électromagnétiques, un récepteur d'ondes réfléchies et une unité de traitement.

27. Méthode pour mesurer le trou d'un disque de frein, comprenant les étapes:
agencer un calibre élastique (5),
insérer un mandrin (6),
déplacer le mandrin (6) entre une première position de repère et une deuxième position d'expansion radiale du calibre élastique (5) dans le trou (4a), le long d'un axe de translation (Y),
mesurer la translation du mandrin (6),
convertir ladite mesure de translation du mandrin (6) dans une mesure d'expansion radiale du calibre élastique (5);
dans lequel:
elle comprend en plus l'étape d'agencer un corps (2) avec une surface de support plate (3a) pour le disque de frein (4) muni d'un trou de clavetage (4a), ledit corps (2) étant relié de façon tournante à une plaque de support (30) selon un axe correspondant à l'axe de translation (Y);
ledit calibre élastique (5) peut être expansé radialement sur un plan parallèle par rapport au plan de support (3a);
ledit mandrin (6) présente une surface (7) inclinée d'un angle donné (α) par rapport à une direction orthogonale au plan de support (3a), dans ledit calibre élastique (5);
dans ladite deuxième position ledit disque (4) est fixé audit corps (2) au moyen dudit mandrin (6) afin que le disque (4) soit solidaire au corps (2);
ledit axe de translation (Y) est perpendiculaire au plan de support (3a).
